# EUROPEAN PATENT SPECIFICATION

(11) **EP 3 925 838 B1**
(45) Date of publication and mention of the grant of the patent: **26.10.2022**
(21) Application number: 20180384.8
(22) Date of filing: 16.06.2020
(51) Int. Cl.: B60S 1/34

(54) **WIPER SYSTEM FOR CLEANING A VEHICLE WINDOW WITH HIGH CURVATURE**
WISCHERSYSTEM ZUR REINIGUNG EINES FAHRZEUGFENSTERS MIT HOHER KRÜMMUNG
SYSTÈME D'ESSUIE-GLACE POUR NETTOYER UNE VITRE DE VÉHICULE DOTÉ D'UNE GRANDE COURBURE

(43) Date of publication of application: 22.12.2021
(73) Proprietor: Valeo Autosystemy SP. Z.O.O., 32-050 Skawina (PL)
(72) Inventor: SZYMANEK, Przemyslaw, 32050 SKAWINA (PL); JABLECKI, Sebastian, 32050 SKAWINA (PL); OSTROGORSKI, Tomasz, 32050 SKAWINA (PL)
(74) Representative: Valeo Visibility

(56) References cited:
- FR-A1- 2 686 848
- FR-A1- 2 889 498
- US-A- 3 022 531
- US-A- 4 800 610

## Description

The invention relates to a wiper system for cleaning a vehicle window, and more particularly to an adapted wiper system for a complex vehicle window, like panoramic vehicle window.

Generally, a vehicle comprises a windshield in front of a driver, who can see, through the windshield, the road and the front of the vehicle. The windshield must be transparent to allow the driver to observe the front of the vehicle. Because of its position, the windshield is subject to weather conditions, water and dirt can come onto the window and obstruct the driver's vision. For that, the vehicle comprises a wiper system to wipe out of the window this water and dirt.

The wiper system traditionally consists of an arm extending between a first end attached to the vehicle and a second end to which a wiper blade is attached. The arm is connecting to a shaft of a motor of the vehicle via its first end, the arm moving back and forth around an axis of the motor to wipe the windshield.

Some vehicles can be equipped with a panoramic window, being a window comprising extremity portions which extend on the side edge of the vehicle. Theses extremity portions may be difficult to wipe effectively for known wiper systems. Indeed, the wiper system can generally wipe a planar surface but it is more complicated to wipe a window extending in two planes intersected each other.

Such windshields are common in trucks and other heavy vehicles where good visibility and fuel economy are equally important design considerations.

Document FR 2 889 498 A1 discloses a wiper system for cleaning a vehicle window according to the preamble of claim 1.

In this context, the present invention is directed towards a wiper system comprising a drive attachment, an arm, a wiper blade and a connecting body located between the drive attachment and the arm, the wiper system comprising a pivot link between the connecting body and the drive attachment, the wiper system comprising a rotational link between the connecting body and the arm, the rotational link having an axis that extends along a first direction, the pivot link having an axis that extends along a second direction, said first direction and said second direction intersecting, wherein the wiper system comprises a mechanical link between the drive attachment and the arm enforcing a rotation of the pivot link around the second direction upon a rotation of the arm around the first direction.

The connective body links the arm to the drive attachment and comprises the pivot link between the connective body and the drive attachment and the rotational link between the connective body and the arm.

The pivot link is parallel to or confounded with the first direction and the rotational link is parallel to or confounded with the second direction. The first direction and the second direction are intersected each other.

The mechanical link is at least in contact with the arm and/or the drive attachment. The mechanical link may be attached to the arm and/or the drive attachment. The mechanical link guides the wiper blade against two portions of the window of the vehicle extending in planes intersected to each other. The wiper blade can wipe the first portion then the second portion, and then wipe again on the first portion.

The mechanical link ensures a constant distance between the drive attachment and the arm, and more particularly between the different attachment points of the mechanical link when the mechanical link comprises two different attachment points.

According to an optional characteristic of the invention, the first direction that defines the rotational link and the second direction that defines the pivot link are perpendicular.

According to another optional characteristic of the invention, the pivot link comprises a shaft emerging from the connecting body and housed in a bore arranged inside the drive attachment.

The shaft functions as a pivot element which rotates within the bore, like a hole, arranged inside the drive attachment, the connective body can rotate around the pivot link.

According to another optional characteristic of the invention, the connecting body comprises an axial blocking device setting the shaft into the bore.

According to another optional characteristic of the invention, the axial blocking device is a clip cooperating with a notch of the shaft.

According to another optional characteristic of the invention, the axial blocking device is an outgrowth emerging of the shaft and blocked into the drive attachment. According to another optional characteristic of the invention, the drive attachment presents a « U-shape » section with two lateral sides and a upper side linked to the two lateral sides, the lateral and upper sides delimiting at least in part a cavity.

According to another optional characteristic of the invention, the bore is located inside the cavity.

According to another optional characteristic of the invention, the drive attachment comprises a front side closing the « U-shape » section next to the connecting body, the shaft passing through the front side.

According to another optional characteristic of the invention, the mechanical link comprises a lever piece and at least one ball joint disposed at one end of the lever piece.

According to another optional characteristic of the invention, the lever piece comprises at least a housing for the ball joint.

According to another optional characteristic of the invention, the drive attachment and/or the arm comprises at least an outgrowth on which the ball joint is arranged. According to another optional characteristic of the invention, the ball joint of the outgrowth is housed in the housing of the lever piece.

According to another optional characteristic of the invention, the arm presents a « U-shape » section with two lateral walls and an upper wall linked to the two lateral walls, the outgrowth protruding from one of the lateral walls, the rotational link being geometrically interposed between the upper wall and a main axis of the outgrowth. According to another optional characteristic of the invention, the lever piece comprises a first ball joint disposed at one end of the lever piece and a second ball joint disposed at another end of the lever piece, a straight line passing through the first and the second ball joints, the arm and the connecting body can be in a first position in which the straight line forms a first angle with the second direction that defines the pivot line and in a second position in which the straight line forms a second angle with the second direction that defines the pivot link different from the first angle.

According to another optional characteristic of the invention, in a second position in which the straight line forms a second angle with the second direction that defines the pivot link greater than the first angle.

According to another optional characteristic of the invention, the mechanical link comprises a lever body with a gear meshing with a toothed sector provided on the drive attachment, the toothed sector and the gear presenting a curve profile.

According to another optional characteristic of the invention, the gear meshing comprises a plurality of teeth cooperating with the toothed sector.

According to another optional characteristic of the invention, the toothed sector is provided at a corner of the drive attachment between one of the lateral sides and the front side.

According to another optional characteristic of the invention, the toothed sector extends from the upper side of the drive attachment to a free edge of one of the lateral sides.

According to another optional characteristic of the invention, the arm is laterally interposed between the connecting body and the lever body, at least at the second rotational link.

According to another optional characteristic of the invention, the wiper system comprises a spring element attached to the connecting body and to the arm.

According to another optional characteristic of the invention, the arm and the connecting body is configurated to rotate around the axis of the pivot link when the spring element applies a traction between the connecting body and the arm.

The traction of the spring element holds the wiper blade on the window of the vehicle.

The invention relates to a method for wiping a panoramic window using a wiper system according to one of above characteristics to wipe the panoramic window that comprises a first portion extending in a first plan and at least a second portion extending in a second plan intersected to the first plan of the first portion, method in which the wiper blade is in a first position to wipe the first portion of the panoramic window and in a second position to wipe the second portion of the panoramic window, said pivot link being rotating when gradually changing from the first position to the second position.

The second portion consists of a planar surface extending in the second plan and a curve surface linking the planar surface of the second portion to the first portion of the panoramic window. The second portion of the panoramic window extends at least on one of the lateral sides of the vehicle.

The invention concerns also a vehicle comprising a panoramic window and at least a wiper system according to one of above characteristics, configurated to wipe the panoramic window.

Other characteristics, details and advantages of the invention will become clearer on reading the following description, on the one hand, and several examples of realisation given as an indication and without limitation with reference to the schematic drawings annexed, on the other hand, on which :
[Fig. 1] is a perspective representation of a wiper system according to the invention located on a panoramic window;
[Fig. 2] is a perspective representation of the wiper system according to figure i;
[Fig. 3] is an exploded view of the wiper system according to figure 2;
[Fig. 4] is a view from underneath of the wiper system according to figure 2;
[Fig. 5] is a perspective representation of a drive attachment of the wiper system according to figure 2;
[Fig. 6] is a perspective representation of a connective body of the wiper system according to figure 2;
[Fig. 7] is a longitudinal cut of the drive attachment according to figure 5 and the connective body according to figure 6;
[Fig. 8] is a perspective representation of a mechanical link of the wiper system according to figure 2;
[Fig. 9] is a perspective representation of a ball joint of the mechanical link according to figure 8;
[Fig. 10] is a perspective representation of the wiper system according to the figure 2 in a first position;
[Fig. 11] is a perspective representation of the wiper system according to the figure 2 in a second position;
[Fig. 12] is a perspective representation of the wiper system according to a second embodiment;
[Fig. 13] is a perspective representation of a mechanical link of the wiper system according to figure 12;
[Fig. 14] is a perspective representation of a drive attachment of the wiper system according to figure 12.

The characteristics, variants and different modes of realization of the invention may be associated with each other in various combinations, in so far as they are not incompatible or exclusive with each other. In particular, variants of the invention comprising only a selection of features subsequently described in from the other features described may be imagined, if this selection of features is enough to confer a technical advantage and/or to differentiate the invention from prior art.

In the following description, the designations "longitudinal", "traversal" and "vertical" refer to the orientation of a wiper system according to the invention. A longitudinal direction corresponds to a main direction of extension of an arm of the wiper system, this longitudinal direction being parallel to a longitudinal axis L of a marker L, V, T shown in the figures. A transversal direction corresponds to a direction of main extension of an outgrowth of the arm of the wiper system, for example, this transversal direction being parallel to a transverse axis T of a marker L, V, T, and perpendicular to the longitudinal axis L. Finally, a vertical direction corresponds to a vertical axis V of a marker L, V, T, the vertical axis V being perpendicular to the longitudinal axis L and the transversal axis T.

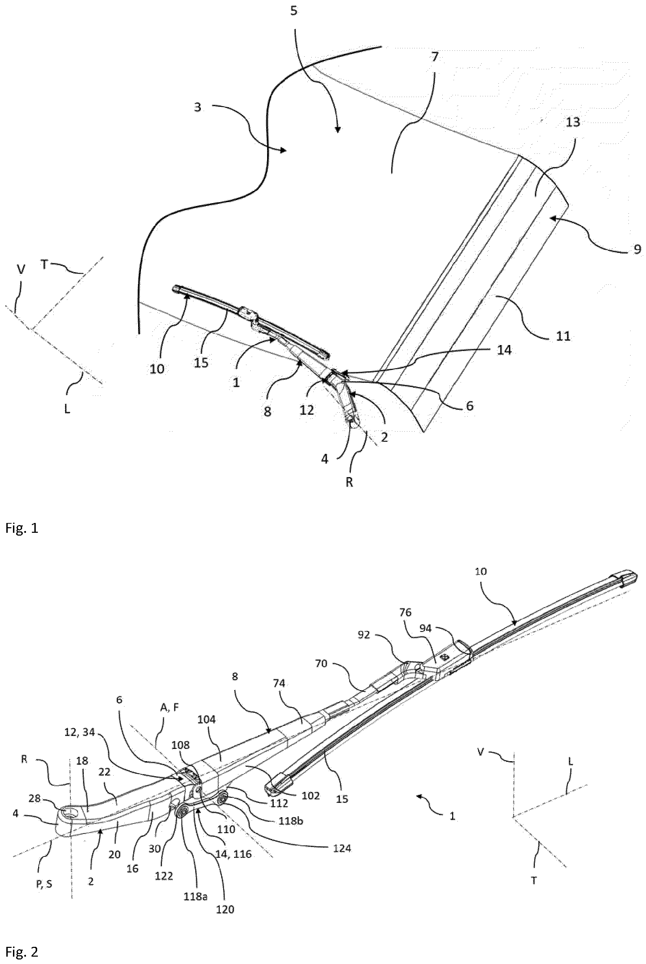

As illustrated in figure 1, a wiper system 1 comprises at least a drive attachment 2 extending between a first end 4 and a second end 6. At its first end 4, the drive attachment 2 is attached to a vehicle, and more particularly to a shaft of an electrical motor that sets the wiper system 1 in motion around a rotation axis R of the wiper system 1. The wiper system 1 has the function of wiping a window of the vehicle, for instance in front windshield 3 of the vehicle. According to the invention, the windshield 3 is a panoramic window comprising at least two portions: a first portion 5 comprising at least a planar surface 7 extending in a first plan and a second portion 9 extending in a second plan intersected of the first plan. The second portion 9 consists of a planar surface 11 extending in the second plan and a curve surface 13 linking the planar surface 11 of the second portion 9 to the planar surface 7 of the first portion 5. The wiper system 1 rotates around the rotation axis R at the first end 4 of the drive attachment 2. Once the motor is on, the wiper system 1 realises a back and forth movement against the windshield 3 of the vehicle to wipe it, including a passage on the first portion 5 and on the second portion 9 of the windshield 3.

However, a windshield 3 comprising only curved surfaces is included in the scope of the invention.

Moreover, the wiper system comprises a wiper blade 10 comprising at least a scraper blade 15 configurated to be in contact with the windshield 3 of the vehicle and to wipe it. The scraper blade 15 has a triangular transversal section of which only one vertex is in contact with the windshield 3. The scraper blade 15 moves around a hinge, a line through which the attack angle of the scraper blade 15 and the hinge and form a specific angle at which the scraper blade 15 is incident to the windshield 3. To provide a good wiping action, the specific angle must be adapted to the angle of the windshield 3, the type of vehicle, speed of the vehicle and type of the scraper blade 15, over the full range of motion of the blade 15. This angle must be respected on the first portion 5 of the windshield 3 as well as on its second portion 9, the invention achieving this by simple and reliable means.

As illustrated in figure 2, the wiper system 1 comprises, in addition to the drive attachment 2 and the wiper blade 10, an arm 8, and a connecting body 12 which is located between the second end 6 of the drive attachment 2 and the arm 8, the arm 8 extending between the connecting body 12 and the wiper blade 10.

The connecting body 12 is linked on the one hand at the arm 8 and on the other hand to the drive attachment 2. The connection between the connecting body 12 and the arm 8 forms a rotational link A around which the arm 8 and the wiper blade 10 can rotate with respect to each other. This rotational link A extends along a first direction essentially parallel to the transversal axis T of the marker L, V, T.

The connection between the connecting body 12 and the drive attachment 2 forms a pivot link P around which the connecting body 12 and the arm 8 can rotate with respect to each other. This pivot link P extends along a second direction S essentially parallel to the longitudinal axis L of the marker L, V, T.

The first direction F of the rotational link A and the second direction F of the pivot link P are perpendicular to each other, when that directions are in intersecting planes. However, and as shown here, the first direction F that defines the rotational link A extends in a plane different to the plane in which the second direction F that defines the pivot link P extends, both planes are intersected to each other.

According to the invention, the wiper system 1 comprises a mechanical link 14 between the drive attachment 2 and the arm 8, this mechanical link 14 enforcing the rotation of the connecting body 12 and the arm 8 around the pivot link P, in both senses around the second direction S that defines the pivot link P

We are now going to describe a first embodiment by starting with the description of each of the elements of the wiper system 1 before describing the cooperation of these elements with each other, in reference to the figures 2 to 9.

As illustrated in the figures 2 to 5, the drive attachment 2 generally takes an angled shape and comprises a first part 16 and a second part 18, the first one terminated by the second end 6 and extending along the second direction S that defines the pivot link P, and the second one terminated by the first end 4 and extending along a direction intersected to the second direction S that defines the pivot link P. Here, the intersected direction and the second direction S that defines the pivot link P form an angle of between i° and 90°, as a non-exhaustive example of the invention.

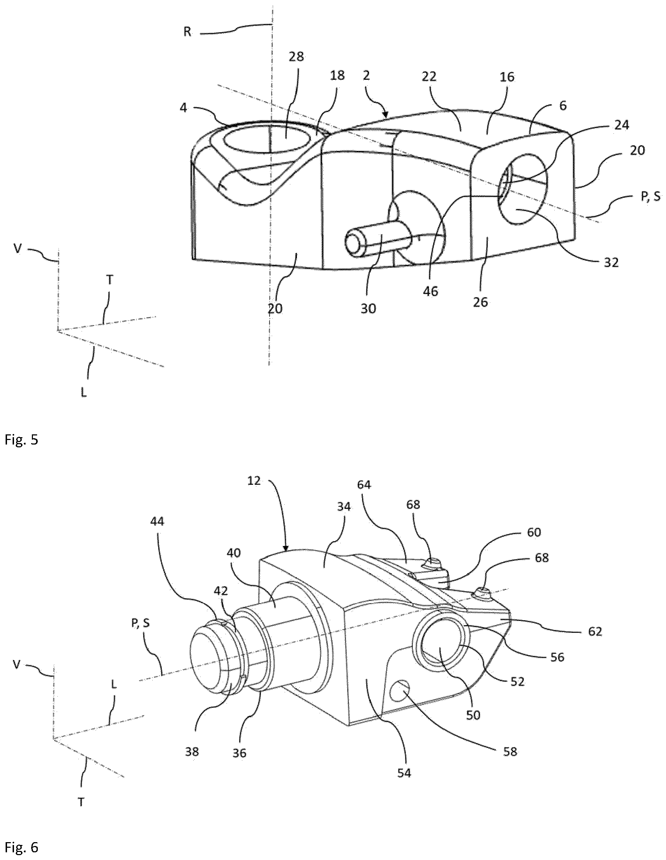

The drive attachment 2 generally takes the shape of a "U-shape" section according to a cut view made in a plan in which the transversal axis T and the vertical axis V lie, with two lateral sides 20 and a upper side 22 linking the two lateral sides 20, each side 20, 22 extending from the first end 4 to the second end 6 of the drive attachment 2. At least in the first part 16 of the drive attachment 2, each lateral side 20 extends in a plan parallel to the longitudinal and vertical axis L, V, whereas the upper side 22 extends in a plan parallel to the longitudinal and transversal axis L, T. The lateral and upper sides 20, 22 participate to delimit a cavity 24. The drive attachment 2 comprises also a front side 26, visible on figure 5, extending in a plan parallel to the transversal and vertical axis T, V, the front side 26 being located at the second end 6 of drive attachment 2 by joining the lateral sides 20 and the upper side 22.

At its first end 4, the drive attachment 2 comprises a hole 28 configurated to host a shaft of the electrical motor of the vehicle. The hole 28 extends along the vertical axis V through of the upper side 22 and inside the cavity 24. Here, the hole 28 takes a circular shape. However, a hole 28 taking another shape is included in the scope of the invention.

In this first embodiment and as shown in figure 5, the drive attachment 2 comprises an outgrowth 30 emerging from one of the lateral sides 20 and extending along an axis parallel to the transversal axis T. The outgrowth 30 is more particularly located at the second end 6 and takes the shape like a circular shaft. The outgrowth 30 is configurated to cooperate with the mechanical link.

The outgrowth 30 can be manufactured directly on the drive attachment 2, or separately of the drive attachment 2 and then assembled to it during a supplementary process manufacture, without going beyond the scope of the invention.

The drive attachment 2 presents a bore 32 at the second end 6 located at the front side 26 of the drive attachment 2. The bore 32 is a through-hole of the front side 26 linking the cavity 24 to the exterior of the drive attachment 2. The bore 32 extends along the longitudinal axis L and is configurated to cooperate with connecting body 12 to form the pivot link P.

As shown in the figure 6, the connecting body 12 comprises a main body 34 and at least a pivot element 36 extending from the main body 34 to the exterior of the connecting body 12, along the longitudinal axis L. The pivot element 36 can be manufactured directly on the connective body 12, or separately of the connective body 12 and then assembled to it during a supplementary process manufacture, without going beyond the scope of the invention. The pivot element 36 is a pawn like a cylinder presenting different sections among which are an extremity section 38 and at least a base section 40 located between the extremity section 38 and the main body 34. The extremity section 38 differs from the base section 40 with a different diameter, and more particularly, the extremity section 38 has a smaller diameter than the diameter of base section 40. Moreover, the base section 40 has a constant diameter. These technical features are only example of the way to arrange the pivot element 36.

The extremity section 38 includes a notch 42 located circularly of the pivot element 36. The notch 42 is made circularly all around inside the pivot element 36. Moreover, the notch 42 has a smaller diameter than the diameter of the extremity section 38.

The connecting body comprises an axial blocking device which is here a clip 44 configurated to cooperate with the notch 42 of the pivot element 36. The clip 44 is a curve rod which is elastically deformable. More precisely, the clip 44 deforms its initial structure to be assembled or disassembled on the pivot element 36 in the notch 42 and returns to its initial structure after being deformed. The clip 44 is used to hold the connecting body 12 once the pivot element 36 is housed in the bore 32 of the drive attachment 2. For that, the clip 44 has an intern diameter slightly larger than the diameter of the notch 42 to form a cooperation with it when the clip 44 is assembled on the notch 42. Moreover, the extern diameter of the clip 44 is larger than the diameter of the extremity section 38 and the diameter of the bore of the drive attachment.

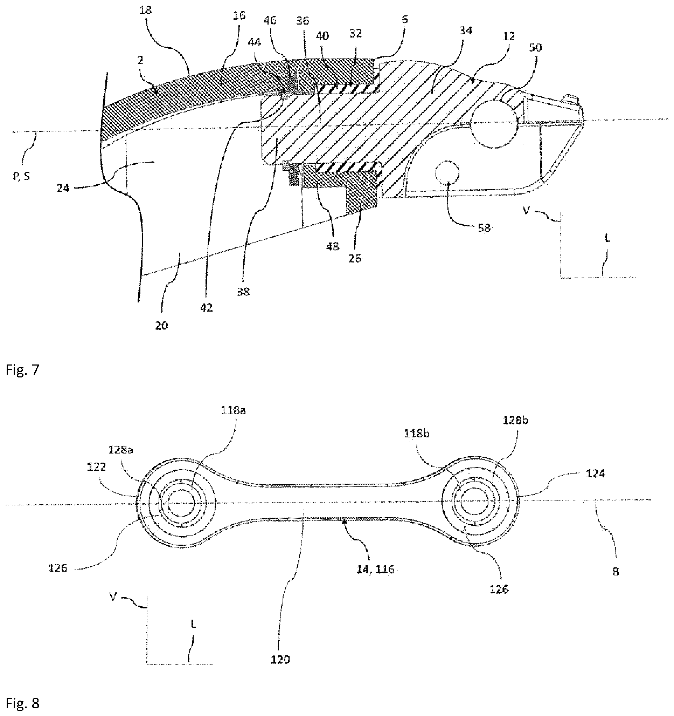

As shown in the figure 7, the pivot element 36 is housed in the bore 32, the extremity section 38 being partially in the cavity 24 of the drive attachment 2. For that, the diameter of the extremity section 38 is smaller than the diameter of the bore 32 to allow the cooperation between the pivot element 36 and the bore 32. The clip 44 is assembled on the notch 42 once the extremity section 38 and more particularly the notch 42 is into the cavity 24 of the drive attachment 2.

The drive attachment 2 comprises a washer 46 disposed in the cavity 24 at the front side 26 and having a hole into its centre, the hole of the washer 46 having the same diameter than the diameter of the bore 32. The clip 44 is configurated to have an external diameter larger than the diameter of the hole of the washer 46. Once the clip 44 assembled into the notch 42 of the extremity section 38 of the pivot element 36, the clip 44 retains the pivot element 36 into the bore 32 by abutting against the washer 46, the cooperation between the clip 44 and the washer 46 holds the connecting body 12 on the drive attachment 2 in position.

Moreover, the bore 32 of the drive attachment 2 takes the shape of a shoulder ring 48 cooperating with the base section 40 of the pivot element 36. The diameter of the shoulder ring 48 is slightly smaller than the diameter of the base section 40 of the pivot element 36, the base element can be in the shoulder ring 48 once the pivot element 36 is housed in the drive attachment 2. The base section 40 of the pivot element 36 helps the pivot element 36 of the connecting body 12 to slide in the bore 32 of the drive attachment 2 when the connecting body 12 rotates around the second direction S that defines the pivot link P.

The pivot element 36 and the bore 32 cooperate to form the pivot link P that rotates around the second direction S. Thus, the pivot element 36 and the connecting body 12 can respectively be moved around this pivot link P in the bore 32 and the drive attachment 2.

In another alternative or cumulative embodiment, the pivot element 36 and the bore 32 can be used interchangeably on the drive attachment 2 and the connective body 12 such as the drive attachment 2 comprises the pivot element 36 and the connective body 12 comprises the bore 32.

As shown in the figures 6 and 7, the connecting body 12 comprises a channel 50 that extends into the main body 34, parallel to the transversal axis T. The channel 50 is circular, like a hollow cylinder, and runs through the main body 34. The channel 50 has a first terminal 52 located on a first lateral side 54 of the main body 34, a second terminal of the channel 50 located on a second lateral side of the main body 34, the first and the second lateral sides 54 of the main body 34 are perpendicular to the transversal axis T.

The channel 50 comprises a crown 56 at least at the first terminal 52 as shown in the figure 6, or preferably at each terminal 54. The crown 56 is like a hoop flanking the first terminal 52 and emerged from the main body 34 to the exterior of the main body 34 along the transversal axis T.

As shown in the figures 6 and 7, the main body 34 comprises at least an orifice 58 that runs through the main body 34 from the first lateral side 54 to the second lateral side. The orifice 58 is like a hollow cylinder, similar to the channel 50. However, the diameter of the orifice 58 is smaller than the diameter of the channel 50, the orifice 58 and the channel 50 are separate and independent of each other.

As shown in the figure 6, the main body 34 comprises a groove 60 extending along the longitudinal axis L, the groove 60 being opposite to the pivot element 36 with respect of the channel 50, as it can be seen in the figure 6. The groove 60 delimits a first tap 62 next to the first lateral side 54 of the main body 34 and a second tap 64 next to the second lateral side of the main body 34. Each tap 62, 64 extends from the main body 34 along the longitudinal axis L, and away from the pivot element 36 with respect to the channel 50. Moreover, each tap 62, 64 comprises a pawn 68 extending from the tap 62, 64 to the exterior, opposite to the orifice 58 with respect of the channel 50, this opposition being realised along the vertical axis V.

The channel 50 and the orifice 58 of the connecting body 12 are configurated to cooperate with the arm 8, the connecting body 12 partially liaising between the arm 8 and the drive attachment 2.

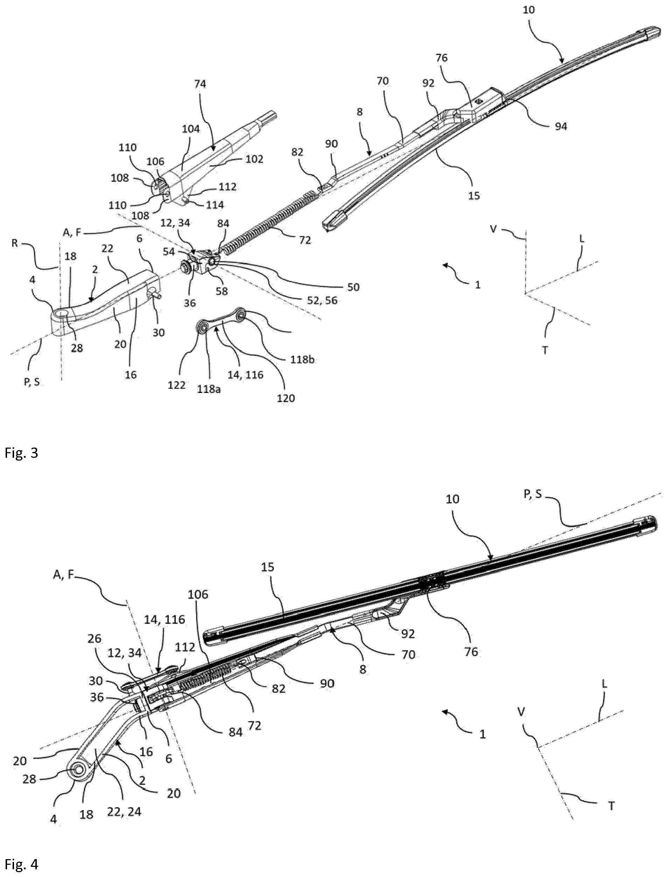

As shown in the figures 3 and 4, the arm 8 comprises at least a rod 70, a spring element 72, a covering hood 74 and a wiper blade connection 76.

The spring element 72 extends between the rod 70 and the connecting body 12 along the longitudinal axis L, each end of the spring element 72 being connected to either the connecting body 12 or the rod 70. As best seen in the figure 4, the spring element 72 comprises a first hook 82 connected to the connecting body 12 and a second hook 84 connected to the rod 70. More particularly, the first hook 82 engages on a shaft partially housed in the orifice 58, the second hook 84 being attached to one end of the rod 70.

The rod 70 of the arm 8 extends principally along the longitudinal axis L between the spring element 72 and the wiper blade connection 76. The rod 70 comprises a first longitudinal end 90 in which a hole is realised and in which the second hook 84 of the spring element 72 is hooked. Like this, the spring element 72 links the connecting body 12 at the rod 70 of the arm 8. The rod 70 comprises a second longitudinal end 92 connected at the wiper blade connection 76.

The wiper blade connection 76 is configurated to receive, for instance, a connector 94 linking the arm 8 to the wiper blade 10, the last one comprising the scraper blade 15 configurated to be in contact with the windshield of the vehicle and to wipe it.

The covering hood 74 generally takes the shape of a "U-shape" section according to a cut view made in a plan in which the transversal axis T and the vertical axis V lie, with two lateral walls 102 and a upper wall 104 linking the two lateral walls 102, each wall 102, 104 extending from a first longitudinal extremity to a second longitudinal extremity of the covering hood 74. Each lateral wall 102 extends in a plan parallel to longitudinal and vertical axis L, V, whereas the upper wall 104 extends in a plan parallel to longitudinal and transversal axis L, T.

Each wall 102,104 of the covering hood 74 participates to delimit a chamber 106 wherein the spring element 72 is housed once the wiper system 1 is assembled, as shown in the figure 4.

As shown in the figures 2 to 4, a transversal section of the covering hood 74 at its first longitudinal extremity is bigger than another transversal section of the covering hood 74 at its second longitudinal extremity. The second longitudinal extremity of the covering hood 74 of the covering hood 74 covers the rod 70 of the arm 8 at least at the first longitudinal end 90, whereas one of the longitudinal extremities covers at least partially the open ends of the taps of the connecting body 12.

Each lateral wall 102 of the covering hood 74 has a longitudinal extension 108 extending from the lateral wall 102 to the exterior of the covering hood 74 along the longitudinal axis L. Each longitudinal extension 108 comprises a circular opening 110 which diameter is slightly bigger than the external diameter of the crown 56 of the channel 50 of the connecting body 12.

The longitudinal extensions 108 of the covering hood 74 partially cover the lateral sides 54 of the connecting body 12. Once the wiper system 1 is assembled, the connecting body 12 is interposed between each longitudinal extension 108 of the covering hood 74, the crowns 56 of the channels' terminals 52 being housed in the circular openings 110 of the longitudinal extensions 108, as we can see in the figure 2 or 4. The cooperation between the crowns 56 of the channel 50 and the circular openings 110 forms the rotational link A between the arm 8 and the connecting body 12, the arm 8 and the wiper blade 10 rotating around the first direction F that defines the rotational link A.

Moreover, at least one of the lateral walls 102 comprises an inferior extension 112 extending along the vertical axis V from the lateral wall 102 to the exterior of the covering hood 74 and opposite to the upper wall 104 with respect of the circular opening 110. The inferior extension 112 of the lateral wall 102 is near to the first lateral side 54 of the connecting body 12. The inferior extension 112 is an integrated part of the covering hood 74, but an inferior extension 112 can be a separate element and be assembled at the covering hood 74 during a supplementary process manufacture without going beyond the scope of the invention.

The inferior extension 112 has an outgrowth 114 taking the shape of a cylindric pawn protruding from one of the lateral walls 102 to the exterior of the covering hood 74, parallel to the transversal axis T. The outgrowth 114 of the covering hood 74 is located on the lateral wall 102 so that the circular openings 110 are geometrically interposed between the upper wall 104 and a main axis of the outgrowth 114. In other words, according to the vertical axis V, the circular openings 110 are located between the outgrowth 114 and the upper wall 104.

In the following description and to simplify the understanding of the invention, we use the terms "first" and "second" to differentiate the outgrowth 30 of the drive attachment 2 to the outgrowth 114 of the covering hood 74 such as the first outgrowth 30 refers to the outgrowth 30 of the drive attachment 2, and the second outgrowth 114 refers to the outgrowth 114 of the covering hood 74.

In the preferred embodiment, the mechanical link 14 comprises a lever piece 116 and at least a ball joint 118 disposed at one longitudinal end of the lever piece 116, as shown in figure 8. According to the represented example, the lever piece 116 has a central part 120 extending rectilinearly between a first longitudinal end 122 and a second longitudinal end 124, each longitudinal end 122, 124 of the lever piece 116 comprising a ball joint 118.

More particularly, the lever piece 116 extends rectilinearly between the first and the second longitudinal ends 122, 124. The lever piece 116 comprises a ball housing 126 at each longitudinal end 122, 124 in which the ball joint 118 is housed. Each ball housing 126 is composed by at least a spherical part 128 in which the ball joint 118 can rotate. For that, each spherical part 128 of the lever piece 116 presents an internal spherical side configurated to house the ball joint 118 and to allow a rotation of the ball joint 118 into the spherical part 128. As shown in figure 8, a first ball joint 118a is housed in a first spherical part 128a at the first longitudinal end 122 and a second ball joint 118b is housed in a second ball housing 128b as the second longitudinal end 124.

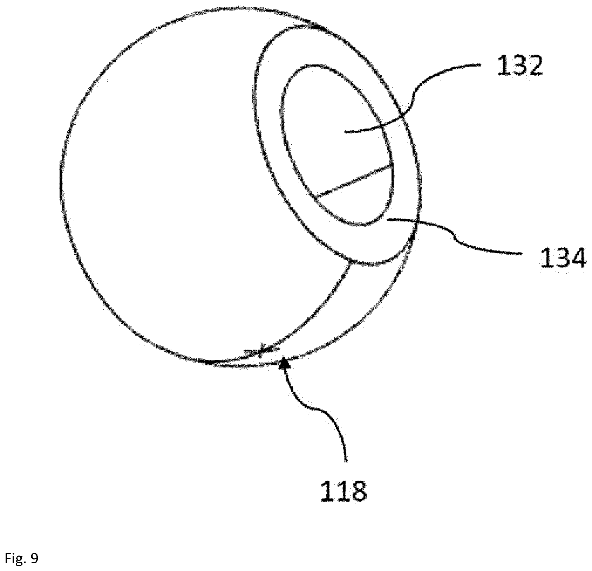

The ball joint 118 is represented in the figure 9 and take the shape of a spherical ball with a through hole 132. The ball joint 118 has two plan sides 134 parallel to each other's. The through hole 132 is opening on both plan sides 134 of the ball joint 118. The through hole 132 is a circular hole configurated to cooperate with the first or the second outgrowths.

As represented in the figures 2 and 4, the lever piece 116 cooperates with the arm 8 and the drive attachment 2 by housing the first outgrowth 30 in the first ball joint 118a and housing the second outgrowth 114 in the second ball joint 118b. The lever piece 116 is held in position on the wiper system 1 by the tight guidance of each outgrowth 30, 114 in its respective ball joint 118.

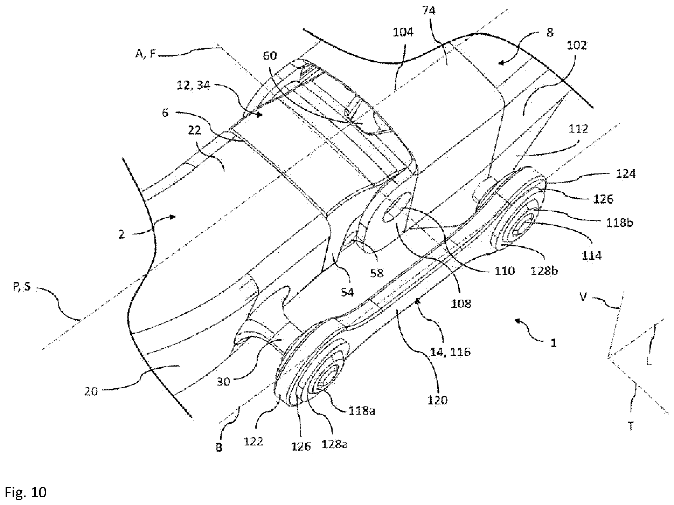

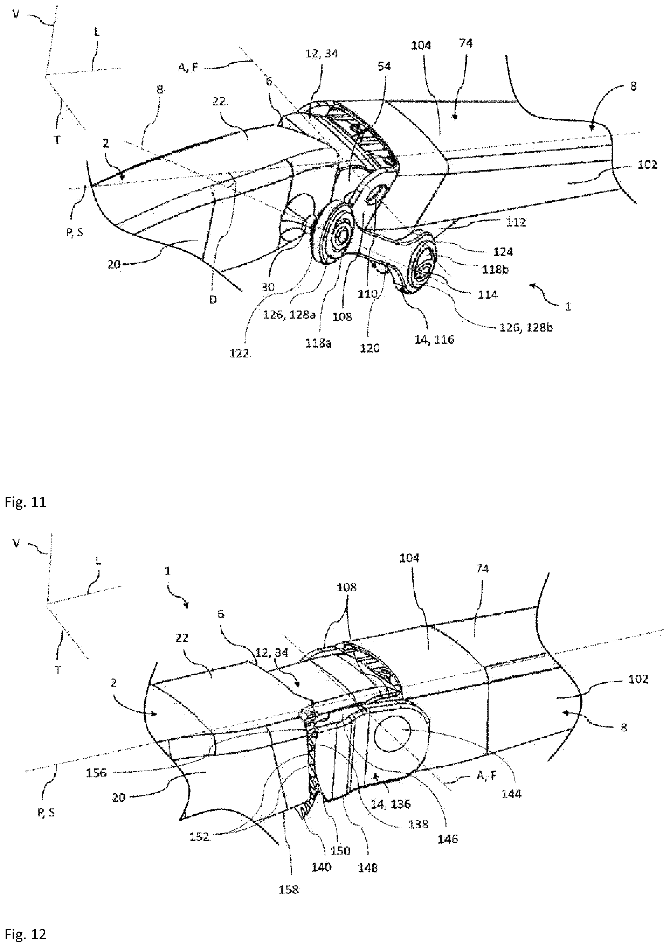

We will now describe the cooperation between the mechanical link 14 and the rest of components of the wiper system 1 during the wiper system 1 wipe a panoramic window of the vehicle with reference to figures 10 and 11.

As shown in figure 10, the wiper system 1 is represented in a first position corresponding to the moment when the scraper blade wipes the first portion of the panoramic window. In this first position, the lever piece 116 extends parallel to the longitudinal axis L. Moreover, the upper wall 104 of the covering hood 74 extends in a plan parallel to a plan in which the transversal axis T and the longitudinal axis L lie, this plan being also parallel to a plan in which the upper side 22 of the drive attachment 2 extends. In the same time, the lateral walls 102 of the covering hood 74 extend in plans parallel to the plans in which the lateral sides 20 of the drive attachment 2 extend.

A straight-line B passing through the first and the second ball joints 118a, 118b of the lever piece 116 forms a first angle with the second direction S that defines the pivot link P when the wiper system 1 is in the first position. For instance, and according to the example represented here in figure 10, this first angle measures o° because the straight-line B is parallel to the second direction S.

The spring element maintains the scraper blade against the panoramic window to assure the wiping of the said panoramic window. When the wiper system 1 moves to the second portion of the panoramic window, a traction force of the spring element holds the scraper blade against this second portion of the panoramic window, the wiper system 1 gradually changing to a second position represented in figure 11. During this, the connecting body 12 and the arm 8 rotate around the pivot link P.

In this second position, the wiper system 1 is configurated to wipe the second portion of the panoramic window. Thus, the upper wall 104 of the covering hood 74 extends in a plan intersected to the plan wherein the upper side 22 of the drive attachment 2 extends. At the same time, the lateral walls 102 of the covering hood 74 extend in plans parallel to each other's and intersected to the plans in which the lateral sides 20 of the drive attachment 2 extend.

Moreover, the straight line B passing through the first and the second ball joints 118a, 118b of the lever piece 116 forms a second angle D with the second direction S that defines the pivot link P when the wiper system 1 is in the second position, the second angle being different of the first angle formed by the straight line B passing through the first and the second ball joints 118a, 118b of the lever piece 116 with the second direction S that defines the pivot link P when the wiper system 1 is in the first position, as in figure 10.

The spring element 72 holds the scraper blade against the second portion of the panoramic window, the lever piece 116 turning the arm 8 and the wiper blade 10 to the second portion.

For that, the lever piece 116 maintains an equidistance between the first outgrowth 30 and the second outgrowth 114, the ball joints 118a, 118b allowing the rotation of the lever piece 116 around the outgrowths 30, 114. The rotations of the lever piece 116 around that outgrowths 30, 114 and the traction force of the spring element allow a perfect positioning of the scraper blade onto the second portion of the panoramic window, respecting an angle of the wiper blade that allow the scraper blade to move from in-wipe movement to out-wipe movement. This specific angle formed by the line crossing the contact point of the scraper blade in contact with the windshield and the hinge of such scraper blade, and the windshield is comprised within the value range mentioned above. When the wiper system 1 returns to wipe the first portion of the panoramic window, the wiper system 1 gradually changes from the second position to the first position.

We will now describe a second embodiment of the wiper system 1 in reference to figures 12 to 14.

As shown in the figure 12, the mechanical link 14 comprises a lever body 136 with a gear 138 meshing with a toothed sector 140 provided on the drive attachment 2, the toothed sector 140 and the gear 138 presenting a curve profile.

Indeed, the lever body 136 comprising on the one hand a circular orifice 142 cooperating with the connecting body 12 and the arm 8, and on the other hand the gear 138 cooperating with the toothed sector 140 of the drive attachment 2.

The circular orifice 142 has a diameter similar to the circular openings 110 of the covering hood 74. During the assembly of the wiper system 1, the covering hood 74 is assembled and positioned on the connecting body 12 so that the connecting body 12 is located partially between each longitudinal extension 108 of the covering hood 74. The mechanical link 14 is positioned on one of the longitudinal extensions 108, more particularly near the first lateral side 54 of the connecting body 12, the circular orifice 142 aligning with the channel 50 of the connecting body 12 and the circular openings 110 of the covering hood 74. To attach the connecting body 12, the covering hood 74 and the mechanical link 14 altogether, the wiper system 1 comprises a tubular shaft 144 received in the channel 50 of the connecting body 12, through the circular openings 110 of the covering hood 74 and the circular orifice 142 of the lever body 136, as shown in figure 12.

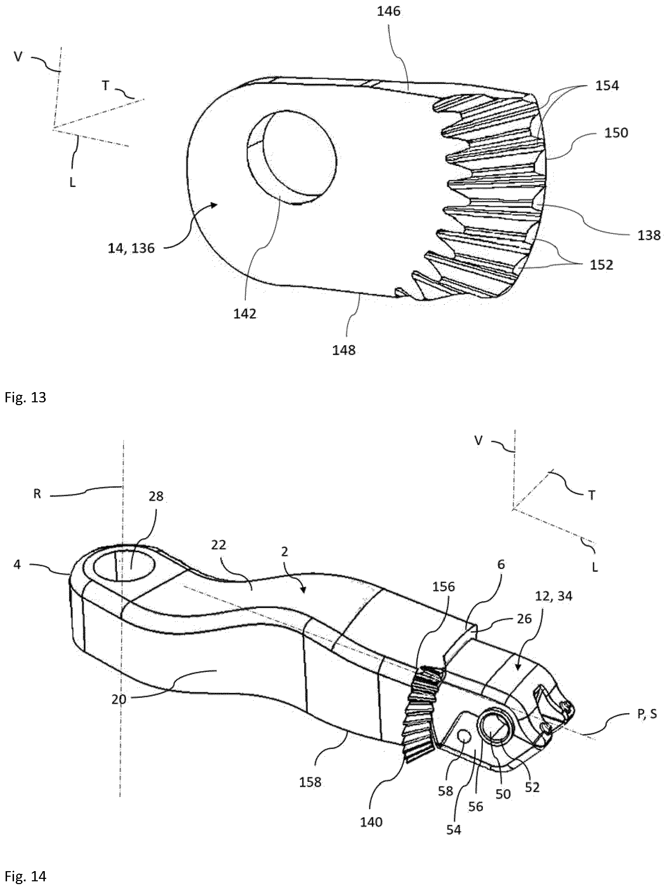

The lever body 136 represented in the figure 13 has an upper edge 146, a lower edge 148 and at least a lateral edge 150 linking the upper edge 146 to the lower edge 148. The lever body 136 comprises the gear 138 at its lateral edge 150 and consists of a toothed sector comprising a curve profile, and more particularly a concave profile, seen from the circular orifice 142. The lever body 136 comprises a plurality of teeth 152, each tooth 152 of the plurality of teeth 152 extends radially from the centre of the lever body 136 to the exterior of the lever body 136. Each tooth is realized on the lateral edge 150 of the lever body 136, with interposition of grooves 154. The gear 138 is configurated to cooperate with the toothed sector of the drive attachment.

As shown in the figure 14, the drive attachment 2 comprises the toothed sector 140 provided at a corner 156 of the drive attachment 2 between one of the lateral sides 20 and the front side 26 of the drive attachment 2. More particularly, the lateral side 20 where is installed the toothed sector 140, is next to the first lateral side 54 of the connecting body 12. Thus, the gear of the lever body can cooperate with the toothed sector 140 of the drive attachment 2.

The toothed sector 140 extends from the upper side 22 of the drive attachment 2 to a free edge 158 of the lateral side 20, the number of teeth and their range may vary. Moreover, the toothed sector 140 extends along the corner 156 of the drive attachment 2 between the lateral side 20 next to the lever body 136 and the front side 26. The toothed sector 140 comprises a curve profile and more particularly a concave profile, seen from the channel 50. As the gear of the liver body 136, the toothed sector 140 comprises a plurality of teeth realised similarly to the plurality of teeth of the gear of the lever body, each tooth extending radially from the lateral side 20 of the drive attachment 2.

In this second embodiment and similarly at the preferred embodiment, the wiper system 1 can be in the first or in the second positions, as defined above. As shown in the figure 12, the mechanical link 14 guides also the connecting body 12 and the arm 8 during the movement from one of the first or the second positions to the other position of the wiper system i. For that, the lever body 136 rotates partially around the pivot link P during the wiper system 1 gradually changing to a one of the positions to the other, the lever body 136 following the toothed sector 140 of the drive attachment 2 during the position swiping. Each tooth 152 of the gear 138 temporally move from one groove to the other of the toothed sector 140 in a gear-like manner.

The traction force of the spring element causes the rotations of the lever body 136 along the toothed sector 140 and allow a good positioning of the scraper blade on the second portion of the panoramic window. The specific angle formed by the line through the attack angle of the scraper blade and the hinge and the windshield is comprised within the value range above mentioned on the first portion of the windshield as well as to the second portion. When the wiper system 1 returns to wipe the first portion of the panoramic window, the wiper system 1 gradually changes from the second position to the first position.

The description above shows a male - female connection for the pivot link P, the male part being designed on the connecting body 12 and the female part being designed inside the drive attachment 2. Of course, such male - female connection can be reversed, the mal part being located onto the drive attachment 2 and the female part being designed inside the connecting body 12.

The invention shall not, however, be limited to the means and configurations described and illustrated herein.

In particular, the mechanical link can be located on the second lateral side of the connecting body without falling outside of the scope of the invention and its shape may be different. Moreover, the lever piece cans extend along the vertical axis if the position of outgrowths allow it.

## Claims

1. A wiper system (1) for cleaning a vehicle window, comprising a drive attachment (2), an arm (8), a wiper blade (10) and a connecting body (12) located between the drive attachment (2) and the arm (8), the wiper system (i) comprising a pivot link (P) between the connecting body (12) and the drive attachment (2), the wiper system (i) comprising a rotational link (A) between the connecting body (12) and the arm (8), the rotational link (A) having an axis that extends along a first direction (F), the pivot link (P) having an axis that extends along a second direction (S), said first direction (F) and said second direction (S) intersecting, **characterized in that** the wiper system (i)
comprises a mechanical link (14) between the drive attachment (2) and the arm (8) enforcing a rotation of the pivot link (P) around the second direction (S) upon a rotation of the arm (8) around the first direction (F).

2. The wiper system (i) according to claim 1, **characterized in that** the first direction (F) that defines the rotational link (A) and the second direction (S) that defines the pivot link (P) are perpendicular.

3. The wiper system (i) according to one of the preceding claims, **characterized in that** the pivot link (P) comprises a shaft (36) emerging from the connecting body (12) and housed in a bore (32) arranged inside the drive attachment (2).

4. The wiper system (i) according to claim 3, **characterized in that** the connecting body (12) comprises an axial blocking device (44) setting the shaft (36) into the bore (32).

5. The wiper system (i) according to one of the preceding claims, **characterized in that** the drive attachment (2) presents a « U-shape » section with two lateral sides (20) and a upper side (22) linked to the two lateral sides (20), the lateral and upper sides (20, 22) delimiting at least in part a cavity (24).

6. The wiper system (i) according to claim 5 in combination with claim 3, **characterized in that** the drive attachment (2) comprises a front side (26) closing the « U-shape » section next to the connecting body (12), the shaft (36) passing through the front side (26).

7. The wiper system (1) according to one of the preceding claims, **characterized in that** the mechanical link (14) comprises a lever piece (116) and at least one ball joint (118,
118a, 118b) disposed at one end (122, 124) of the lever piece (116).

8. The wiper system (1) according to claim 7, **characterized in that** the drive attachment (2) and/or the arm (8) comprises at least an outgrowth (30, 114) on which the ball joint (118, 118a, 118b) is arranged.

9. The wiper system (1) according to claim 8, **characterized in that** the arm (8) presents a « U-shape » section with two lateral walls (102) and an upper wall (104) linked
to the two lateral walls (102), the outgrowth (114) protruding from one of the lateral walls (102), the rotational link (A) being geometrically interposed between the upper wall (104) and a main axis of the outgrowth (114).

10. The wiper system (1) according to one of claims 7 to 9, **characterized in that** the lever piece (116) comprises a first ball joint (118a) disposed at one end (122) of the lever piece (116) and a second ball joint (118b) disposed at another end (124) of the lever piece (116), a straight line (B) passing through the first and the second ball joints (118a, 118b), the arm (8) and the connecting body (12) can be in a first position in which the straight line (B) forms a first angle with the second direction that defines the pivot link (P) and in a second position in which the straight line forms a second angle (D) with the second direction that defines the pivot link (P) different from the first angle.

11. The wiper system (1) according to one of claims 1 to 6, **characterized in that** the mechanical link (14) comprises a lever body (136) with a gear (138) meshing with a toothed sector (140) provided on the drive attachment (2), the toothed sector (140) and the gear (138) presenting a curve profile.

12. The wiper system (1) according to claim 11 in combination with claim 6, **characterized in that** the toothed sector (140) is provided at a corner (156) of the drive attachment (2) between one of the lateral sides (20) and the front side (26).

13. The wiper system (1) according to one of the preceding claims, **characterized in that** the wiper system (1) comprises a spring element (72) attached to the connecting body (12) and to the arm (8).

14. The wiper system (1) according to claim 13, the arm (8) and the connecting body (12) is configurated to rotate around the axis of the pivot link (P) when the spring element (72) applies a traction between the connecting body (12) and the arm (8).

15. Method for wiping a panoramic window (3) using a wiper system (1) according to one of claims 1 to 14 to wipe the panoramic window (3) that comprises a first portion (5) extending in a first plan and at least a second portion (9) extending in a second plan secant to the first plan of the first portion (5), method in which the wiper blade (10) is in a first position to wipe the first portion (5) of the panoramic window (3) and in a second position to wipe the second portion (9) of the panoramic window (3), said pivot link (P) being rotating when gradually changing from the first position to the second position.

## Patentansprüche

1. Wischersystem (1) zum Reinigen eines Fahrzeugfensters, umfassend einen Antriebsaufsatz (2), einen Arm (8), ein Wischerblatt (10) und einen Verbindungskörper (12), der sich zwischen dem Antriebsaufsatz (2) und dem Arm (8) befindet, wobei das Wischersystem (1) eine Schwenkvorrichtung (P) zwischen dem Verbindungskörper (12) und dem Antriebsaufsatz (2) umfasst, wobei das Wischersystem (1) eine Drehverbindung (A) zwischen dem Verbindungskörper (12) und dem Arm (8) umfasst, wobei die Drehverbindung (A) eine Achse aufweist, die sich entlang einer ersten Richtung (F) erstreckt, die Drehverbindung (P) eine Achse aufweist, die sich entlang einer zweiten Richtung (S) erstreckt, die erste Richtung (F) und die zweite Richtung (S) sich schneiden, **dadurch gekennzeichnet, dass** das Wischersystem (1) eine mechanische Verbindung (14) zwischen dem Antriebsaufsatz (2) und dem Arm (8) umfasst, die bei einer Drehung des Arms (8) um die erste Richtung (F) eine Drehung der Schwenkverbindung (P) um die zweite Richtung (S) erzwingt.

2. Wischersystem (1) gemäß Anspruch 1, **dadurch gekennzeichnet, dass** die erste Richtung (F), die die Drehverbindung (A) definiert, und die zweite Richtung (S), die die Schwenkverbindung (P) definiert, rechtwinklig zueinander stehen.

3. Wischersystem (1) gemäß einem der vorhergehenden Ansprüche, **dadurch gekennzeichnet, dass** die Schwenkverbindung (P) eine aus dem Verbindungskörper (12) austretende Welle (36) umfasst, die in einer im Innern des Antriebsaufsatzes (2) angeordneten Bohrung (32) aufgenommen ist.

4. Wischersystem (1) gemäß Anspruch 3, **dadurch gekennzeichnet, dass** der Verbindungskörper (12) eine axiale Blockiervorrichtung (44) umfasst, die die Welle (36) in die Bohrung (32) setzt.

5. Wischersystem (1) gemäß einem der vorhergehenden Ansprüche, **dadurch gekennzeichnet, dass** der Antriebsaufsatz (2) einen U-förmigen Abschnitt mit zwei Seitenwänden (20) und einer mit den beiden Seitenwänden (20) verbundenen Oberseite (22) aufweist, wobei die Seitenwände und die Oberseite (20, 22) mindestens teilweise einen Hohlraum (24) begrenzen.

6. Wischersystem (1) gemäß Anspruch 5 in Kombination mit Anspruch 3, **dadurch gekennzeichnet, dass** der Antriebsaufsatz (2) eine Stirnseite (26) umfasst, die den U-förmigen Abschnitt neben dem Verbindungskörper (12) abschließt, wobei die Welle (36) durch die Stirnseite (26) verläuft.

7. Wischersystem (1) gemäß einem der vorhergehenden Ansprüche, **dadurch gekennzeichnet, dass** die mechanische Verbindung (14) ein Hebelstück (116) und mindestens ein an einem Ende (122, 124) des Hebelstücks (116) angeordnetes Kugelgelenk (118, 118a, 118b) umfasst.

8. Wischersystem (1) gemäß Anspruch 7, **dadurch gekennzeichnet, dass** der Antriebsaufsatz (2) und/oder der Arm (8) mindestens eine Auskragung (30, 114) umfasst, an dem das Kugelgelenk (118, 118a, 118b) angeordnet ist.

9. Wischersystem (1) gemäß Anspruch 8, **dadurch gekennzeichnet, dass** der Arm (8) einen U-förmigen Abschnitt mit zwei Seitenwänden (102) und einer mit den beiden Seitenwänden (102) verbundenen oberen Wand (104) aufweist, wobei die Auskragung (114) aus einer der Seitenwände (102) herausragt, wobei die Drehverbindung (A) geometrisch zwischen der oberen Wand (104) und einer Hauptachse der Auskragung (114) angeordnet ist.

10. Wischersystem (1) gemäß einem der Ansprüche 7 bis 9, **dadurch gekennzeichnet, dass** das Hebelstück (116) ein erstes Kugelgelenk (118a), das an einem Ende (122) des Hebelstücks (116) angeordnet ist, und ein zweites Kugelgelenk (118b), das an einem anderen Ende (124) des Hebelstücks (116) angeordnet ist, und eine Gerade (B) umfasst, die durch das erste und das zweite Kugelgelenk (118a, 118b) verläuft, wobei der Arm (8) und der Verbindungskörper (12) in einer ersten Stellung sein können, in der die Gerade (B) einen ersten Winkel mit der zweiten Richtung bildet, die die Schwenkverbindung (P) definiert, und in einer zweiten Stellung, in der die Gerade einen zweiten Winkel (D) mit der zweiten Richtung bildet, die die Schwenkverbindung (P) definiert, der von dem ersten Winkel verschieden ist.

11. Wischersystem (1) gemäß einem der Ansprüche 1 bis 6, **dadurch gekennzeichnet, dass** die mechanische Verbindung (14) einen Hebelkörper (136) mit einem Zahnrad (138) umfasst, das mit einem am Antriebsaufsatz (2) vorgesehenen Zahnsektor (140) kämmt, wobei der Zahnsektor (140) und das Zahnrad (138) ein Kurvenprofil aufweisen.

12. Wischersystem (1) gemäß Anspruch 11 in Kombination mit Anspruch 6, **dadurch gekennzeichnet, dass** der Zahnsektor (140) an einer Ecke (156) des Antriebsaufsatzes (2) zwischen einer der Seitenwände (20) und der Stirnseite (26) vorgesehen ist.

13. Wischersystem (1) gemäß einem der vorhergehenden Ansprüche, **dadurch gekennzeichnet, dass** das Wischersystem (1) ein am Verbindungskörper (12) und am Arm (8) befestigtes Federelement (72) umfasst.

14. Wischersystem (1) gemäß Anspruch 13, wobei der Arm (8) und der Verbindungskörper (12) dazu ausgelegt sind, sich um die Achse der Schwenkverbindung (P) zu drehen, wenn das Federelement (72) eine Zugkraft zwischen dem Verbindungskörper (12) und dem Arm (8) ausübt.

15. Verfahren zum Wischen einer Panoramascheibe (3) unter Verwendung eines Wischersystems (1) gemäß einem der Ansprüche 1 bis 14 zum Wischen der Panoramascheibe (3), die einen ersten Abschnitt (5), der sich in einer ersten Ebene erstreckt, und mindestens einen zweiten Abschnitt (9), der sich in einer zweiten Ebene quer zur ersten Ebene des ersten Abschnitts (5) erstreckt, aufweist, Verfahren, bei dem sich das Wischerblatt (10) in einer ersten Stellung befindet, um den ersten Abschnitt (5) der Panoramascheibe (3) zu wischen, und in einer zweiten Stellung befindet, um den zweiten Abschnitt (9) der Panoramascheibe (3) zu wischen, wobei die Schwenkverbindung (P) beim allmählichen Übergang aus der ersten Stellung in die zweite Stellung gedreht wird.

## Revendications

1. Système d'essuie-glace (1) pour nettoyer une vitre de véhicule, comprenant un accessoire d'entraînement (2), un bras (8), un balai d'essuie-glace (10) et un corps de raccordement (12) situé entre l'accessoire d'entraînement (2) et le bras (8), le système d'essuieglace (1) comprenant une liaison de pivotement (P) entre le corps de raccordement (12) et l'accessoire d'entraînement (2), le système d'essuie-glace (1) comprenant une liaison rotative (A) entre le corps de raccordement (12) et le bras (8), la liaison rotative (A) ayant un axe qui s'étend le long d'une première direction (F), la liaison de pivotement (P) ayant un axe qui s'étend le long d'une seconde direction (S), ladite première direction (F) et ladite seconde direction (S) se croisant, **caractérisé en ce que** le système d'essuieglace (1) comprend une liaison mécanique (14) entre l'accessoire d'entraînement (2) et le bras (8) appliquant une rotation de la liaison de pivotement (P) autour de la seconde direction (S) lors d'une rotation du bras (8) autour de la première direction (F).

2. Système d'essuie-glace (1) selon la revendication 1, **caractérisé en ce que** la première direction (F) qui définit la liaison rotative (A) et la seconde direction (S) qui définit la liaison de pivotement (P) sont perpendiculaires.

3. Système d'essuie-glace (1) selon l'une des revendications précédentes, **caractérisé en ce que** la liaison de pivotement (P) comprend un arbre (36) émergeant du corps de raccordement (12) et logé dans un alésage (32) agencé à l'intérieur de l'accessoire d'entraînement (2).

4. Système d'essuie-glace (1) selon la revendication 3, **caractérisé en ce que** le corps de raccordement (12) comprend un dispositif de blocage axial (44) plaçant l'arbre (36) dans l'alésage (32).

5. Système d'essuie-glace (1) selon l'une des revendications précédentes, **caractérisé en ce que** l'accessoire d'entraînement (2) présente une section « en forme de U » avec deux côtés latéraux (20) et un côté supérieur (22) lié aux deux côtés latéraux (20), les côtés latéraux et supérieur (20, 22) délimitant au moins en partie une cavité (24).

6. Système d'essuie-glace (1) selon la revendication 5 en combinaison avec la revendication 3, **caractérisé en ce que** l'accessoire d'entraînement (2) comprend un côté avant (26) fermant la section « en forme de U » à côté du corps de raccordement (12), l'arbre (36) traversant le côté avant (26).

7. Système d'essuie-glace (1) selon l'une des revendications précédentes, **caractérisé en ce que** la liaison mécanique (14) comprend une pièce de levier (116) et au moins un joint à rotule (118, 118a, 118b) disposé au niveau d'une extrémité (122, 124) de la pièce de levier (116).

8. Système d'essuie-glace (1) selon la revendication 7, **caractérisé en ce que** l'accessoire d'entraînement (2) et/ou le bras (8) comprend au moins une excroissance (30, 114) sur laquelle le joint à rotule (118, 118a, 118b) est agencé.

9. Système d'essuie-glace (1) selon la revendication 8, **caractérisé en ce que** le bras (8) présente une section « en forme de U » avec deux parois latérales (102) et une paroi supérieure (104) liée aux deux parois latérales (102), l'excroissance (114) faisant saillie à partir d'une des parois latérales (102), la liaison rotative (A) étant interposée géométriquement entre la paroi supérieure (104) et un axe principal de l'excroissance (114).

10. Système d'essuie-glace (1) selon l'une des revendications 7 à 9, **caractérisé en ce que** la pièce de levier (116) comprend un premier joint à rotule (118a) disposé au niveau d'une extrémité (122) de la pièce de levier (116) et un second joint à rotule (118b) disposé au niveau d'une autre extrémité (124) de la pièce de levier (116), une ligne droite (B) traversant les premier et second joints à rotule (118a, 118b), le bras (8) et le corps de raccordement (12) pouvant être dans une première position dans laquelle la ligne droite (B) forme un premier angle avec la seconde direction qui définit la liaison de pivotement (P) et dans une seconde position dans laquelle la ligne droite forme un second angle (D) avec la seconde direction qui définit la liaison de pivotement (P) différent du premier angle.

11. Système d'essuie-glace (1) selon l'une des revendications 1 à 6, **caractérisé en ce que** la liaison mécanique (14) comprend un corps de levier (136) avec un engrenage (138) s'engrenant avec un secteur à dents (140) fourni sur l'accessoire d'entraînement (2), le secteur à dents (140) et l'engrenage (138) présentant un profil courbé.

12. Système d'essuie-glace (1) selon la revendication 11 en combinaison avec la revendication 6, **caractérisé en ce que** le secteur à dents (140) est fourni au niveau d'un coin (156) de l'accessoire d'entraînement (2) entre l'un des côtés latéraux (20) et le côté avant (26).

13. Système d'essuie-glace (1) selon l'une des revendications précédentes, **caractérisé en ce que** le système d'essuie-glace (1) comprend un élément ressort (72) fixé au corps de raccordement (12) et au bras (8).

14. Système d'essuie-glace (1) selon la revendication 13, le bras (8) et le corps de raccordement (12) étant configurés pour tourner autour de l'axe de la liaison de pivotement (P) lorsque l'élément ressort (72) applique une traction entre le corps de raccordement (12) et le bras (8).

15. Procédé pour essuyer une vitre panoramique (3) à l'aide d'un système d'essuie-glace (1) selon l'une des revendications 1 à 14 pour essuyer la vitre panoramique (3) qui comprend une première partie (5) s'étendant dans un premier plan et au moins une seconde partie (9) s'étendant dans un second plan sécant avec le premier plan de la première partie (5), procédé dans lequel le balai d'essuie-glace (10) est dans une première position pour essuyer la première partie (5) de la vitre panoramique (3) et dans une seconde position pour essuyer la seconde partie (9) de la vitre panoramique (3), ladite liaison de pivotement (P) étant en rotation lorsqu'elle passe graduellement de la première position à la seconde position.
